# EUROPEAN PATENT APPLICATION

(11) **EP 4 671 945 A1**
(43) Date of publication of application: **31.12.2025**
(21) Application number: 24760352.5
(22) Date of filing: 20.02.2024
(51) Int. Cl.: G06F 3/04845, G06F 3/04817

(54) **DISPLAY PROGRAM AND DISPLAY METHOD**

(30) Priority: 21.02.2023 JP 2023025050
(71) Applicant: BROTHER KOGYO KABUSHIKI KAISHA, Nagoya-shi, Aichi 467-8561 (JP)
(72) Inventor: KAIGAWA, Shinsuke, Nagoya-shi, Aichi 467-8562 (JP)
(74) Representative: J A Kemp LLP
(86) International application number: PCT/JP2024/005980
(87) International publication number: WO 2024/177054

(57) **Abstract**

The present invention provides a display program and a display method that improve user convenience, as compared to the prior art, in a case where checking the process by which an object displayed on the display is edited to become the current object.

Based on the display program, the processor of the computer, based on execution of editing of the object (yes at S8), updates the object displayed on the display (S9), and stores history information which associates the object, editing content of the object, and order information indicating an editing order (S10). The processor acquires a target period (S6). The processor identifies, as a target object, an object corresponding to history information within the target period, among one or more objects being displayed on the display, and highlights the identified target object (S7).

## Description

### TECHNICAL FIELD

The present disclosure relates to a display program and a display method.

### BACKGROUND ART

Known collaborative work support systems enable contact with users of drawing information in generated files or object users within general documents using arbitrary communication means (for example, refer to Patent Document 1). Specifically, the system stores at least one type of user contact information in a communication medium in association with the identification information of the user of the drawing information. The system displays the user's identification information for the drawing information in association with the drawing information, and accepts an instruction from the user to contact the user corresponding to the drawing information. The contact information of the user on the communication medium is acquired, and according to the acquired contact information, the system connects the user's computer and the user's contact through the communication medium.

### PRIOR ART LITERATURE

### PATENT LITERATURE

Patent Document 1: Japanese Unexamined Patent Application Publication No. 10-134002

### SUMMARY

### Problem to be Solved by the Invention

In known collaborative work support systems, it is difficult to check the process by which an object displayed on the display is edited to become the current object.

An object of the present invention is to provide a display program and a display method that improve user convenience, as compared to the prior art, in a case where checking the process by which an object displayed on the display is edited to become the current object.

### MEANS FOR SOLVING THE PROBLEM

A display program according to a first aspect of the present invention is a program for a computer including a display and a processor. The display program includes instructions that instruct the processor to execute a history storing step for storing, based on execution of editing of an object, history information associating the object, editing content of the object, and order information indicating an editing order, a display controlling step for updating the object to be displayed on a display based on the execution of the editing of the object, an acquiring step for acquiring a target period which is part of an entire period during which a plurality of pieces of the history information are stored, an identifying step for identifying, as a target object, among one or more of the objects being displayed on the display, the object corresponding to the history information within the target period, among the plurality of pieces of the history information, and a highlighting step for highlighting the identified target object. The computer executing the display program according to the first aspect contributes to facilitating the user's distinction between the target object, which is edited during the target period, and another object among one or more objects displayed on the display, by highlighting the target object on the display. Therefore, the highlighting step of the display program contributes to improving user convenience, compared to the prior art, when checking the process by which an object displayed on the display is edited to become the current object.

A display method according to a second aspect of the present invention is executed by a processor of a computer including a display and the processor. The display method includes a history storing step for storing, based on execution of editing of an object, history information associating the object, editing content of the object, and order information indicating an editing order, a display controlling step for updating the object to be displayed on the display based on the execution of the editing of the object, an acquiring step for acquiring a target period which is part of an entire period during which a plurality of pieces of the history information are stored, an identifying step for identifying, as a target object, among one or more of the objects being displayed on the display, the object corresponding to the history information within the target period, among the plurality of pieces of the history information, and a highlighting step for highlighting the identified target object. The display method according to the second aspect contributes to facilitating the user's distinction between the target object that is edited during the target period, and an object other than the target object, among one or more objects displayed on the display, by highlighting the target object on the display. Therefore, the highlighting step of the display method contributes to improving user convenience, compared to the prior art, when checking the process by which an object displayed on the display is edited to become the current object.

### BRIEF DESCRIPTION OF DRAWINGS

[FIG.1] FIG. 1 is a diagram showing the electrical configuration of an editing system 1.
[FIG.2] FIG. 2 is a flowchart of main processing.
[FIG.3] FIG. 3 illustrates screens G1 and G2 of a specific example.
[FIG.4] FIG. 4 illustrates a history information storage area 39.
[FIG.5] FIG. 5 is a flowchart of notification display processing.
[FIG.6] FIG. 6 illustrates a screen transition of a display 35 of a terminal device 3A of a user A, a screen transition of the display 35 of a terminal device 3B of a user B, and a screen transition of the display 35 of a terminal device 3C of a user C, in a specific example.
[FIG.7] FIG. 7 illustrates the screen transition of the display 35 of the terminal device 3A of the user A, the screen transition of the display 35 of the terminal device 3B of the user B, and the screen transition of the display 35 of the terminal device 3C of the user C, in the specific example.
[FIG.8] FIG. 8 is a flowchart of notification send processing according to a first modified example.
[FIG.9] FIG. 9 is a flowchart of notification display processing according to the first modified example.
[FIG.10] FIG. 10 is a flowchart of notification display processing according to a second modified example.

### DETAILED DESCRIPTION OF THE EXEMPLARY EMBODIMENTS

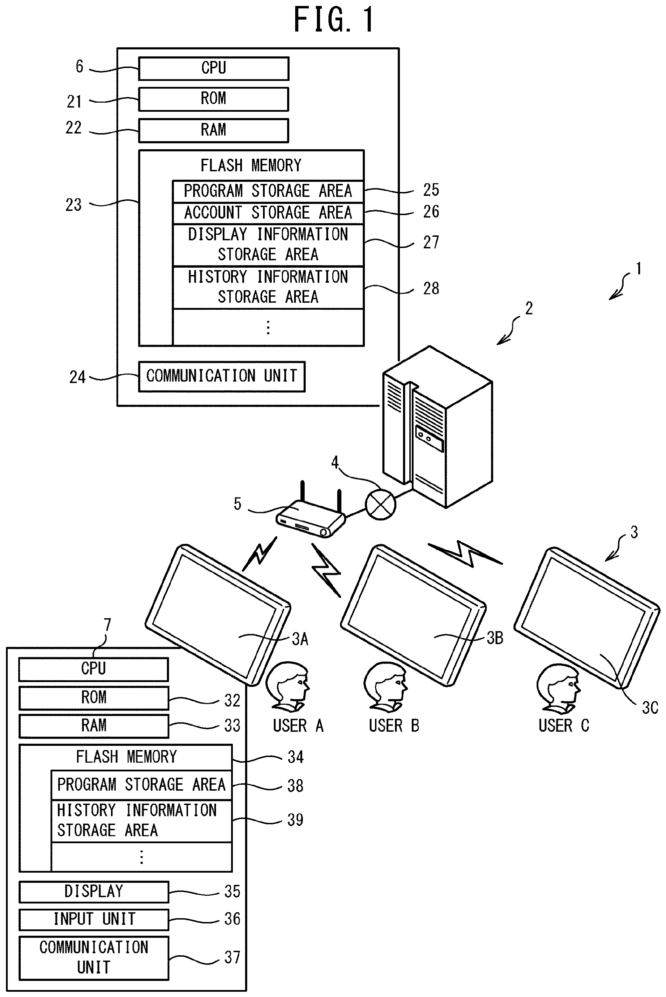

An embodiment of present disclosure will now be described with reference to the drawings. As shown in FIG. 1, an editing system 1 includes a server 2 and three terminal devices 3. The server 2 is communicatively connected to an access point 5 via a network line 4. The three terminal devices 3 are each used by different users A, B, and C. Each of the terminal devices 3 is a portable terminal device such as a well-known tablet-type terminal device and a multifunctional mobile phone (so-called smartphone), and can wirelessly connect to the access point 5. Hereinafter, the terminal device 3 used by the user A is also referred to as terminal device 3A; the terminal device 3 used by the user B is also referred to as terminal device 3B; and the terminal device 3 used by the user C is also referred to as terminal device 3C. In the following description, a case will be described where the terminal devices 3A to 3C each have the same configuration, but the terminal devices 3A to 3C may each have a different configuration from one another.

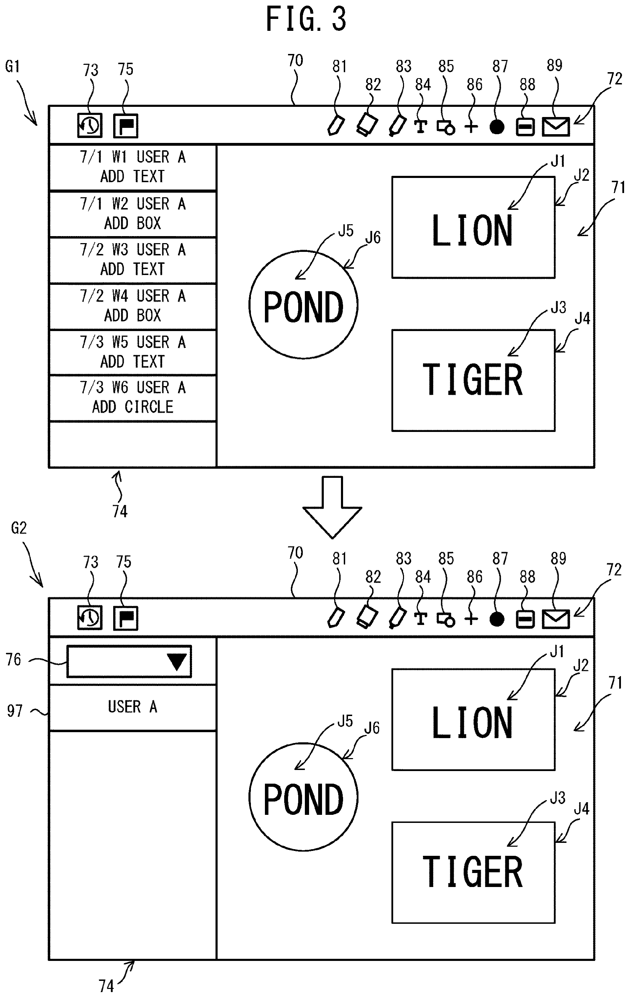

As shown in FIG. 1, the server 2 is includes a CPU 6, a ROM 21, a RAM 22, a flash memory 23, and a communication unit 24. The CPU 6 is configured to control the server 2. The ROM 21 stores information and the like used by the CPU 6 during execution of various programs. The RAM 22 is configured to temporarily store data while the CPU 6 is executing processing. The flash memory 23 is a non-volatile storage device. The flash memory 23 includes a program storage area 25, an account storage area 26, a display information storage area 27, and a history information storage area 28. Various programs executed by the CPU 6 are stored in the program storage area 25. Account information is stored in the account storage area 26. Account information includes user information used to distinguish one user from another user, and a password used in a case where logging into the editing system 1. Display information indicating an object displayed in a latest editing area 71 (refer to FIG. 3) is stored in the display information storage area 27. History information, which will be described later, is stored in the history information storage area 28. The communication unit 24 is a communication module that allows the server 2 to communicate with each of the terminal devices 3A to 3C via the network line 4 and the access point 5.

The terminal device 3 includes a CPU 7, a ROM 32, a RAM 33, a flash memory 34, a display 35, an input unit 36, and a communication unit 37. The CPU 7 is configured to control the terminal device 3. The ROM 32 stores information and the like used by the CPU 7 during execution of various programs. The RAM 33 is configured to temporarily store data while the CPU 7 is executing processing. The flash memory 34 stores various programs and the like including a display program, described later, executed by the CPU 7. The display 35 is a liquid crystal display configured to display various types of information. The input unit 36 is a touchscreen placed on the surface of the display 35, which is configured to detect the contact position of operating objects such as pens and fingers on the display 35 to output detection signals corresponding to the detected contact positions to the CPU 7. The communication unit 37 is a communication module that enables the terminal device 3 to communicate with server 2 via the network line 4 and the access point 5.

The user operates the terminal device 3 to launch a shared application. With the launch of the shared application, the editing system 1 is configured to display, on the display 35 of the terminal device 3, a shared screen among the terminal devices 3, as designated by the user. The editing system 1 allows a plurality of users A to C to use their respective terminal devices 3A to 3C to edit an object in the common editing area 71, described later, via the server 2 either simultaneously or at different times.

An overview of the processing executed by the editing system 1 will be described using a case where an editing operation is performed on the terminal device 3A as an example. When the CPU 7 of the terminal device 3A detects object editing through the input unit 36, the CPU 7 of the terminal device 3A updates the screen of the display 35 based on the editing content. The CPU 7 of the terminal device 3A stores the history information based on the editing content in a history information storage area 39 of the terminal device 3A, and sends the history information to the server 2 via the network line 4 and the access point 5. When the CPU 6 of the server 2 receives the history information from the terminal device 3A, the CPU 6 stores the received history information in the history information storage area 28 and updates the display information storage area 27 based on the history information. The CPU 6 sends the display information and the history information via the network line 4 and the access point 5 to other terminal devices 3, which also edit the editing area 71 along with the terminal device 3A. When the terminal devices 3B and 3C receive the display information and the history information, the CPU 7 of the terminal devices 3B and 3C updates the display 35 of the terminal device 3B based on the received display information and history information. This allows the content displayed in the editing area 71 to be shown on each display 35 of the terminal devices 3A, 3B, and 3C, and shared within the editing system 1.

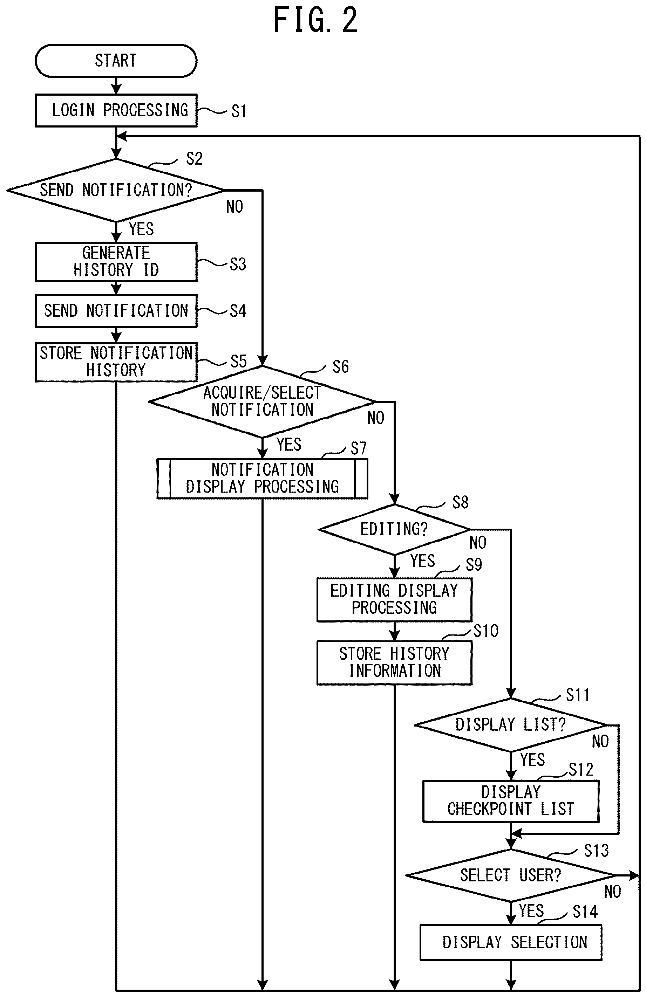

Main processing executed in each terminal device 3A to 3C will now be described with reference to FIG. 2 to FIG. 7. The main processing is executed individually in each terminal device 3. In a case where the CPU 7 is detected a login instruction to log into the editing system 1 input by the user via the input unit 36, the CPU 7 reads out the display program from a program storage area 38 shown in FIG. 1. By executing the read-out display program, the CPU 7 starts the main processing shown in FIG. 2. As a specific example, a scenario will be used where a zoo layout proposed by the user A is collaboratively edited by the users A to C using the editing system 1. In the specific example, the editing area 71 is edited or viewed by the users A to C. The period during which the editing area 71 is edited or viewed spans a plurality of days, and the periods during which each user edits or views the editing area 71 partially overlap.

As shown in FIG. 2, the CPU 7 of each terminal 3 executes the login processing to log into the editing system 1 (S1). Specifically, the CPU 7 sends login information, including user information and a password, to the server 2. The CPU 6 of the server 2 collates the received login information with the account information stored in the account storage area 26. In a case where the login is successful, the CPU 6 sends the display information and the history information of the editing area 71 to be edited to the terminal device 3 that executed the login processing, and continues subsequent processing. The display information and the history information of the editing area 71 are associated with the terminal device 3 that executed the login processing. In a case where the display information associated with the terminal device 3 is not stored in the display information storage area 27, the CPU 6 of the server 2 executes processing to newly start editing of the editing area 71. In a case where the login fails, the CPU 6 sends error information to the terminal device 3 that executed the login processing, and aborts further processing. The CPU 6 is configured to be able to identify the terminal device 3 that sent the history information based on the login information, even when a plurality of users are logged into the editing system 1 simultaneously. The CPU 7 of the terminal device 3 that receives the display information and the history information from the server 2 displays an editing screen 70 shown in FIG. 3 on the display 35.

As shown in FIG. 3, the editing screen 70 includes the editing area 71, a button display area 72, a history button 73, a checkpoint button 75, and a display area 74. The editing area 71 is an area in which objects can be edited. In an initial state, no object is placed in the editing area 71. An object is placed in the editing area 71 based on an editing operation by a user of any of the terminal devices 3. In the example shown in FIG. 3, the editing area 71 includes objects J1 to J6. The objects J1 to J6, edited by the user A, represent a layout proposal of a lion area, a tiger area, and a pond, in the zoo. The object J1 is the text "LION", and the object J2 is a rectangle surrounding the object J1. The object J3 is the text "TIGER", which is placed below the objects J1 and J2. The object J4 is a rectangle surrounding the object J3. The object J5 is the text "POND", and the object J6 is a circle surrounding the object J5 and is placed to the left of the objects J1 to J4.

In the button display area 72, a plurality of buttons 81 to 89 is displayed in the editing area 71. The plurality of buttons 81 to 89 are selectable for designation of the editing attributes that indicate the type of object to be edited, or the editing content. The editing attributes of the present embodiment include strokes, markers, text, shapes, and images. A stroke is a line, such as a straight line or curve, extending to the position indicated by the detection signal. A marker is a line with a predetermined width used for coloring. Text may be letters, numbers, or symbols arranged within a rectangular text block (not shown in the drawings). Shapes are either plane figures or solid figures. Images may be still images or moving images. The editing content in the present embodiment includes adding, deleting, and moving objects, and changing colors, sizes, and fonts.

The button 81 is selected when adding a stroke. The button 82 is selected when erasing an object. The button 83 is selected when adding a marker. The button 84 is selected when adding text. The button 85 is selected when adding a shape. The button 86 is selected when adding an image. The button 87 is selected when changing the color of an object. The button 88 is selected when changing the thickness of a stroke. The button 89 is selected when sending notifications to other users who are co-editing the editing area 71.

The history button 73 and the checkpoint button 75 are selected when switching between displaying a list of history information and displaying a list of checkpoints in the display area 74 of the editing screen 70. A checkpoint is information used to designate a part of the target period within the entire period during which a plurality of pieces of history information are stored in the history information storage area 39. The checkpoint of the present embodiment is automatically generated based on a notification being sent, and is stored in the history information storage area 39. A screen G1 in FIG. 3 shows a state in which the history button 73 is selected and a list of history information is displayed in the display area 74, and a screen G2 in FIG. 3 shows a state in which the checkpoint button 75 is selected and a list of checkpoints is displayed in the display area 74. In a case where the checkpoint button 75 is selected, a selection field 76 is displayed at the top of the display area 74. The selection field 76 is selected when extracting and displaying specific checkpoints from among the list of checkpoints displayed in the display area 74. The specific checkpoint in the present embodiment is the user who performed the checkpoint generating operation.

The CPU 7 determines, based on whether the button 89 is selected, whether an instruction to send a notification is detected (S2). In a case where the notification instruction is not detected (no at S2), the CPU 7 determines whether a notification is acquired from another terminal device 3 or whether an instruction to select a notification is detected (S6). The CPU 7 determines that an instruction to select a notification is detected in a case where an operation selecting any of the displayed checkpoints in the display area 74 is detected. In a case where a notification is not acquired from another terminal device 3 and an instruction to select a notification is not detected (no at S6), the CPU 7 determines whether editing is executed (S8).

In the terminal device 3A, In a case where the text "LION" is input after the button 84 is selected in a state where no object is arranged in the editing area 71, the CPU 7 determines that editing is executed (yes at S8). The CPU 7 of the terminal device 3A updates the object to be displayed on the display 35 (S9). The CPU 7 stores, as the history information, the object J1, the editing content of the object J1, and the order information indicating the order of editing, associated together, in the history information storage area 39 (S10). The history information of the present embodiment is stored for each editing operation. The CPU 7 of the present embodiment associates user information that identifies the user who performed the editing in addition to the object, the editing content, and the order information, and stores this as history information in the history information storage area 39.

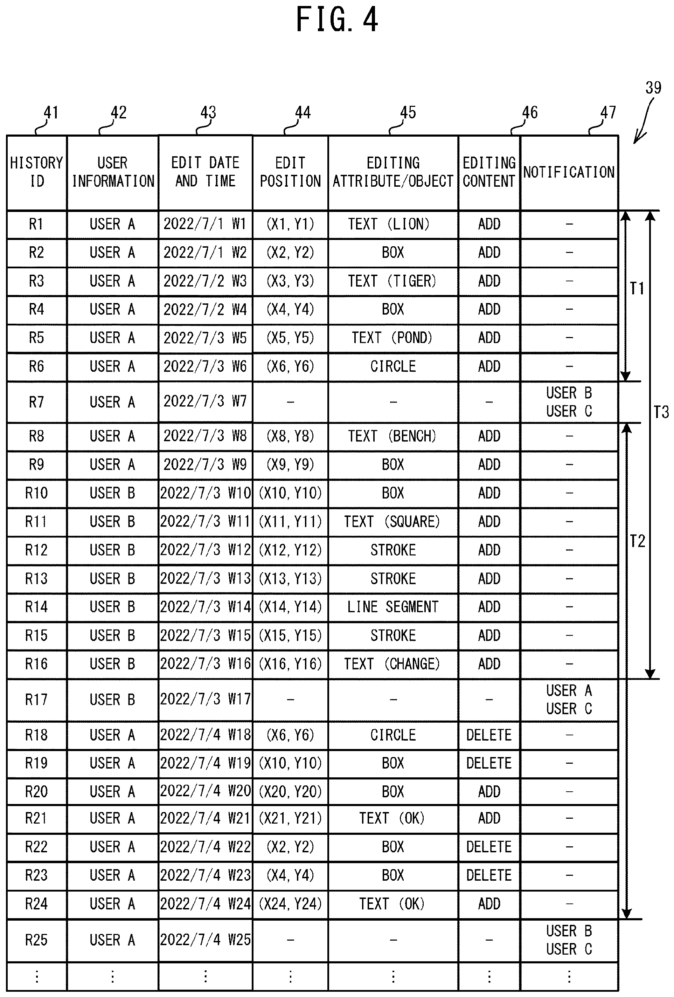

As shown in FIG. 4, the history information indicates history corresponding to an editing operation, and the history information in the present embodiment includes a history ID 41, user information 42, an editing date and time 43, an edit position 44, an editing attribute/object 45, editing content 46, and a notification 47. The history ID 41 is the identification information of the history information. The history ID 41 in the present embodiment is a string that combines the letter "R" and a number indicating the storage order. In the description below, the history ID 41 is used to identify the history information. For example, history information R1 is history information in which the history ID 41 is "R1".

The user information 42 may be any piece of information that can identify the user of terminal device 3. The user information 42 can be the user's name or the identification information of the terminal device 3. The user information 42 of the present embodiment is the user name, and the CPU 7 sets the user information of the history information R1 to "USER A," indicating that the editing operation was performed by the user A. The edit date and time 43 indicates a representative point in time when a single editing operation was carried out, and in the present embodiment, the representative point in time represents the time when the editing operation was completed. The CPU 7 sets "July 1, 2022 W1" as the date and time the editing operation was completed in the edit date and time of the history information R1. In FIG. 4, the string that combines the letter "W" of W1, for example, with a number indicating the storage order, is information indicating a time that is simplified for convenience of description. The order information included in the history information of the present embodiment is based on the editing date and time 43.

The edit position 44 indicates the position of a representative point within the editing area 71 (refer to FIG. 3) of an object edited by the editing operation using coordinate data. The origin of the coordinate data may be set appropriately, for example, the origin of the coordinate data may be located at the top left corner of the editing area 71. The left-right direction of the editing area 71 corresponds to the X-axis direction. The up-down direction of the editing area 71 corresponds to the Y-axis direction. The representative point, for example, is either the center or any vertex of a rectangle that encloses the object. The CPU 7 sets (X1, Y1) at the edit position 44 of the history information R1.

The editing attribute/object 45 indicates the type of object to be edited and the object itself. The CPU 7 sets "text (LION)" as the editing attribute/object 45 in the history information R1. The editing content 46 indicates the edit made to the object. The CPU 7 sets 'add' to the editing content 46 of the history information R1. The notification 47 indicates user information of a notification recipient among the other terminal devices 3. In a case where the checkpoint is stored, the CPU 7 sets the user information of the notification recipient to the notification 47. The checkpoint is generated in a case where the button 89 is selected. In a case where the history information is stored based on the editing operation, the CPU 7 sets the symbol "-", which indicates that no notification is made, to the notification 47.

The CPU 7 of the terminal device 3A sends the history information R1 to the server 2. The editing system 1 according to the present embodiment is configured such that the history information is stored in the history information storage area 28 for each editing area 71. In the present embodiment, the history information stored in the history information storage area 28 and the history information stored in the history information storage area 39 are identical to each other. In a case where the CPU 6 of the server 2 receives the history information, the CPU 6 stores the history information R1 as the history information of the editing area 71 in the history information storage area 28. The CPU 6 of server 2 sends the history information R1 and the display information to each terminal device 3 that is currently logged in among the other terminal devices 3 editing the editing area 71 in collaboration with the terminal device 3A that sent the history information R1. In a case where the CPU 7 of the terminal device 3B receives the history information R1 of the terminal device 3A from the server 2, the CPU 7 determines that editing is executed by the user A based on the received history information R1 (yes at S8), and displays the editing content of the user A on the display 35 based on the history information R1 and the display information (S9). The CPU 7 of the terminal device 3B stores the received history information (S10).

Through similar processing, the CPU 7 of the terminal device 3A executes processing to edit the objects J2 to J6 (yes at S8, S9), and stores, in the history information storage area 39, history information R2 to R6 corresponding to the objects J2 to J6 (S10).

In a case where the editing is not executed (no at S8), the CPU 7 determines whether to display the list of checkpoints (S11). The CPU 7 executes this determination based on whether a list display instruction is detected based on whether the checkpoint button 75 is selected, or whether the checkpoints are being displayed in a list (S11). In a case where the list is not to be displayed (no at S11), the CPU 7 returns the processing to step S2. In a case where the list is to be displayed (yes at S11), the CPU 7 causes the display 35 to display at least one checkpoint in the list (S12). The CPU 7 determines whether a selection instruction for selecting a user is detected based on whether the selection field 76 is selected (S13). In a case where the selection instruction is not detected (no at S13), the CPU 7 returns the processing to step S2.

In a case where the CPU 7 of the terminal device 3A is detected a notification instruction (yes at S2), the CPU 7 generates the history ID 41 (S3). The CPU 7 acquires the notification destination, information identifying the editing screen 70 currently displayed on the display 35, and the notification content, and sends a notification, including the acquired information identifying the editing screen 70 and notification content, as well as the history ID generated at step S3, to the acquired notification destination (S4). The notification may be sent directly to the terminal device 3 of the notification destination, or may be sent to the terminal device 3 of the notification destination via the server 2. The CPU 7 stores the notification history, including order information, as a checkpoint used to identify the target period (S5). The CPU 7 of the present embodiment stores the sender information, in addition to the notification date and time as order information, in the history information storage area 39. The CPU 7 sets the sender information "USER A" in the user information 42 of the history information R7 and the notification date and time "2022/7/3 W7" in the editing date and time 43. The CPU 7 sets the symbol "-", indicating that no editing is performed on the object in each of the edit position 44, editing attribute/object 45, and editing content 46 of the history information R7, and sets the recipient user information "USER B, USER C" in the notification 47.

After the terminal device 3A sends the notification, in a case where the object J8 is added on the terminal device 3A, the CPU 7 executes processing to edit the object J8 (yes at S8, S9), and stores the history information R8 corresponding to the object J8 in the history information storage area 39 (S10).

After the object J8 is added on the terminal device 3A, in a case where the terminal device 3B executes the login processing (S1), the CPU 7 of the terminal device 3B acquires a part of the target period from the entire period in which a plurality of the history information is stored in the history information storage area 39 (yes at S6), and executes notification display processing (S7). The entire period in which the plurality of the history information is stored in the history information storage area 39 refers to the period from the point when the first history information in the order of storage was stored to the point when the last history information in the order of storage was stored among the plurality of the history information stored in the history information storage area 39. The target period of the present embodiment is the period divided by checkpoints. More specifically, the endpoint of the target period is set as the time when the checkpoint identified by the history ID at step S6 is stored, and the starting point of the target period is set as a period determined based on the presence or absence of a previous checkpoint before the checkpoint identified by the history ID at step S6.

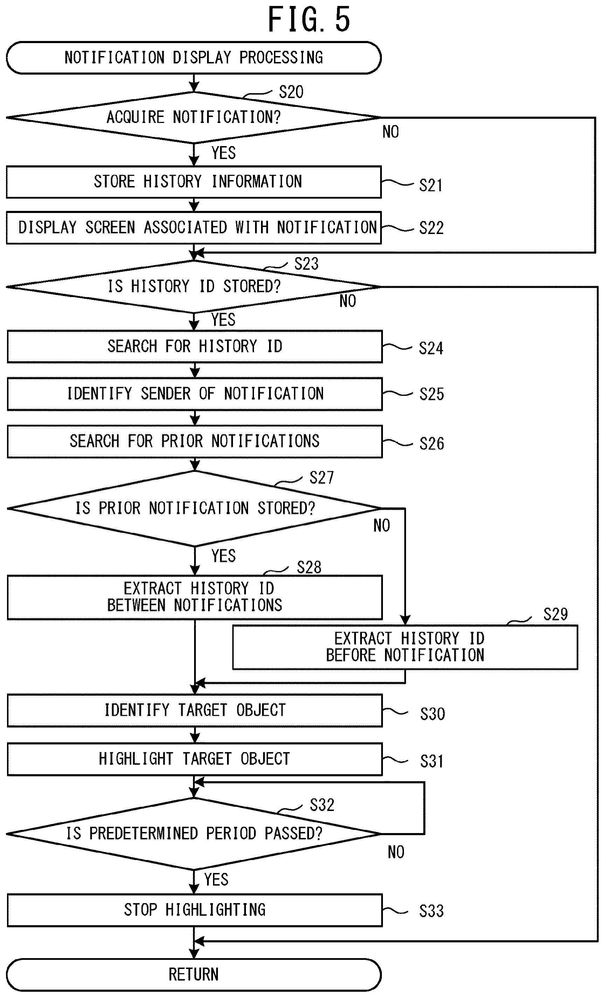

As illustrated in FIG. 5, the CPU 7 of the terminal device 3B determines whether the notification display processing is executed based on acquisition of the notification from another terminal device 3 (S20). The CPU 7 of the terminal device 3B determines that the notification display processing is executed based on acquisition of a notification from the terminal device 3A (yes at S20), stores the history information R7, which corresponds to the notification, in the history information storage area 39 (S21), and displays the screen associated with the notification (S22). The screen associated with the notification is a screen that is displayed based on information that identifies the editing screen 70 included in the notification, and corresponds to the editing screen 70 that the terminal device 3A was displaying in a case where the user A, the sender, performed the notification operation.

In a case where the notification display processing is not executed based on acquisition of the notification from another terminal device 3 (no at S20), or after step S22, the CPU 7 determines whether the notification acquired in processing at step S6 from another terminal device 3, or an instruction to select a notification, includes a history ID (S23). In a case where a history ID is not included (no at S23), the CPU 7 thereby terminates the notification display processing and returns the processing to step S2 of the main processing. The CPU 7 may display an error message indicating that a history ID is not included.

The CPU 7 of the terminal device 3B determines that the notification acquired in step S6 includes "R7" as the history ID (yes at S23), searches for the history information R7 in the history information storage area 39 (S24), and identifies the sender of the notification as "USER A" (S25). The CPU 7 of the terminal device 3B refers to the history information storage area 39, searches for any notifications sent by the user A identified at step S25 prior to the history information R7 (S26), and determines whether notifications sent by the user A prior to the history information R7 are included (S27). The CPU 7 of the present embodiment changes the setting method for the target period, which is a part of the entire period over which a plurality of the history information is stored in the history information storage area 39, based on the determination result at step S27.

The CPU 7 of the terminal device 3B determines that no notification sent by the user A prior to the history information R7 is included (no at S27). In this case, the CPU 7 of the terminal device 3B sets the period prior to the history information R7 as a target period T1 among the plurality of history information stored in the history information storage area 39, extracts the history ID 41 of the history information in which the user information 42 is the user A and which is stored in the target period T1 (S29). The CPU 7 of the terminal device 3B acquires R1 to R6 among the history IDs 41 of the plurality of pieces of the history information stored in the history information storage area 39.

The CPU 7 identifies, as the target object, an object among one or more objects displayed on the display 35, which corresponds to the history information within the target period among a plurality of pieces of the history information (S29). The CPU 7 of the present embodiment identifies, as the target object, an object among one or more objects displayed on the display 35, which corresponds to the history information, among a plurality of pieces of the history information, within the target period delimited by checkpoints and including user information of the checkpoint.

In the specific example, in a case where it is determined that no notification sent by the user A prior to the history information R7 is included (no at S27), the CPU 7 of the terminal device 3B extracts the history information R1 to R6 within the target period T1 (S29). Among the one or more objects J1 to J6 and J8 displayed on the display 35, in the processing at step S29, the CPU 7 of the terminal device 3B identifies the objects J1 to J6 corresponding to the history information R1 to R6, for which the history ID 41 was extracted, as the target objects (S30).

The CPU 7 of the terminal device 3B highlights the target objects J1 to J6 identified at step S30 (S31). The manner of highlighting may be selected as appropriate. The highlighting may include a flashing display, changing the color of the object, changing the background color of the object, outlining the object, shading of the object, and the like. The manner of highlighting may be set in advance or may be set by the user. The manner of highlighting may be modified based on the user information and object attributes and the like.

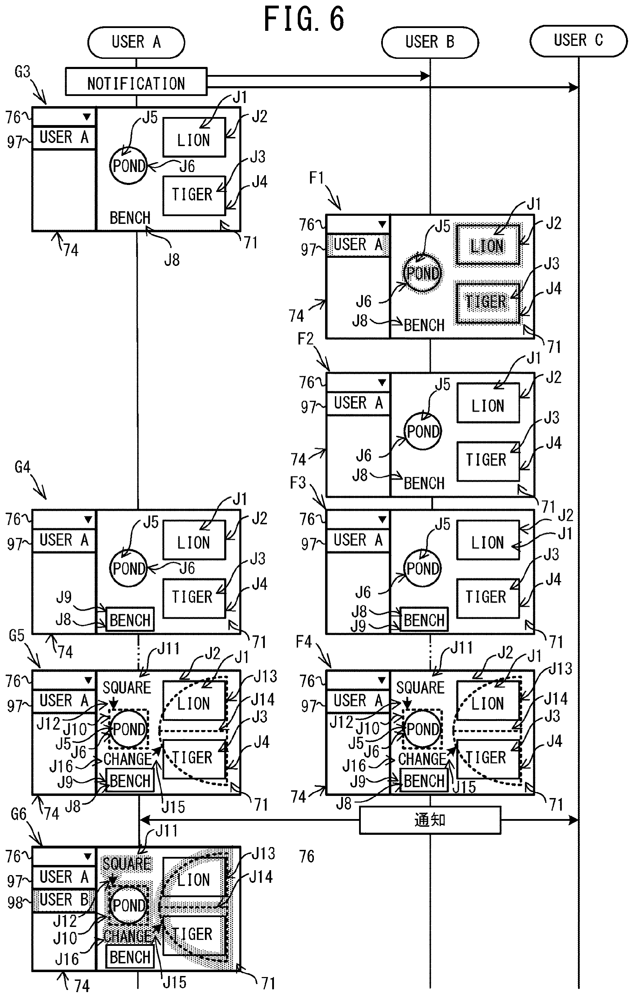

As shown on a screen F1 in FIG. 6, the highlight according to the present embodiment is a display mode in which a border in a color different from the color of the object is added to the target object. The type of border, including at least one selected from a group of the border color, the interval between the border and the object, and the thickness, may be preset or set by the user. The border does not necessarily need to fully encompass the object and may be applied solely to a part of the object's periphery. On the screen F1, the borders added to the target objects J1 through J6 are indicated by dotted shading. The CPU 7 of the terminal device 3B while highlighting the target objects J1 through J6, also highlights the checkpoint history 97 displayed in the display area 74. The checkpoint history 97 indicates the history information R7 corresponding to the notification acquired in S6.

The CPU 7 determines whether the predetermined period of time is passed after the highlighting is started at step S31 (S32). The predetermined period of time may be appropriately set, may be a predetermined value, or may be a value set by the user. In a case where the predetermined period of time is not passed (no at S32), the CPU 7 returns the processing to step S32. In a case where the predetermined time is passed (yes at S32), the CPU 7 of the terminal device 3B cancels the border applied to the target objects J1 to J6, as shown on the screen F2, and reverts them to the normal display (S33). The CPU 7 of the terminal device 3B likewise stops highlighting the checkpoint history 97 that is displayed in the display area 74. With this, the CPU 7 of the terminal device 3B terminates the notification display processing and returns the processing to step S2 of the main processing.

In a case where an object J9 is added on the terminal device 3A, as shown on a screen G4, the CPU 7 of the terminal device 3A executes processing to edit the object J9 (yes at S8, S9), and stores history information R9 corresponding to the object J9 in the history information storage area 39 (S10). The CPU 7 of the terminal device 3B, via the server 2, acquires the history information R9 and display information for the object J9 (yes at S8), executes processing to edit the object J9 as shown on a screen F3 (yes at S8, S9), and stores the history information R9 corresponding to the object J9 in the history information storage area 39 (S10). In this manner, in a case where a plurality of users are simultaneously editing the same editing area 71, unless the processing at step S7 is executed, objects in the editing area 71 will not be highlighted even in a case where the editing area 71 is updated based on editing operations performed on another terminal device 3.

After the object J9 is added on the terminal device 3A, in a case where objects J10 to J16 are subsequently added on the terminal device 3B, as shown on a screen F4, the CPU 7 of the terminal device 3B sequentially executes processing to edit the objects J10 through J16 (yes at S8, S9), and stores the respective history information R10 through R16, corresponding to the objects J10 through J16, in the history information storage area 39 (S10). The object J10 is a square-shaped quadrilateral that encloses the object J6, and the object J11 is the text "SQUARE" arranged above the object J10. The objects J12 and J15 are strokes drawn in the form of arrows, while the object J13 is a semicircular stroke drawn so as to enclose the objects J1 and J3. The object J14 is a line segment extending in the lateral direction between the objects J1 and J3, and the object J16 is the text "CHANGE" arranged above the object J10.

The CPU 7 of the terminal device 3A acquires the history information R10 to R16 and the display information of the objects J10 to J16 via the server 2 (yes at S8) and, as shown on a screen G5, executes processing to edit the objects J10 to J16. Upon execution (yes at S8, S9), the CPU 7 of the terminal device 3A stores the history information R10 to R16 corresponding to each of the objects J10 to J16 in the history information storage area 39 (S10).

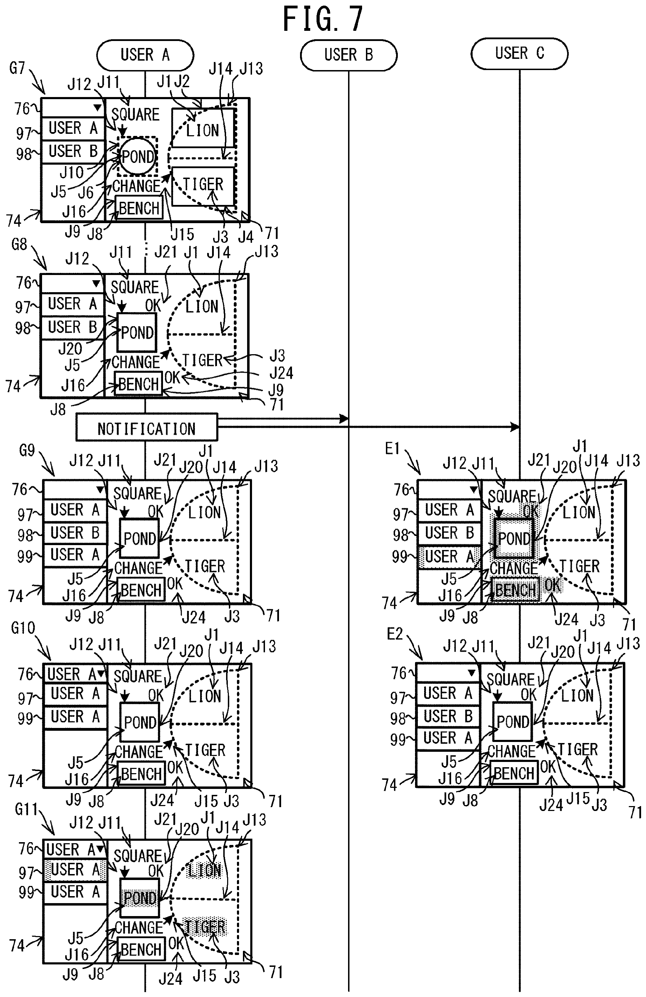

After the objects J10 to J16 are added on the terminal device 3B, in a case where notifications are sent from the terminal device 3B to each of user A and user C, the CPU 7 of the terminal device 3A acquires the notification (yes at S6), and, after displaying the screen associated with the notification (yes at S20, S21, S22), based on the history ID "R17" the user B is identified as the notification sender (yes at S23, S24, S25). Because the CPU 7 of the terminal device 3A determines that no notification sent by the user B prior to the history information R17 is included (S26, no at S27), the CPU 7 identifies the R10 to R16 as the history IDs, which are stored during the target period T3 prior to the history information R17 and for which the user information in the history ID corresponds to the user B (S29). The CPU 7 of the terminal device 3A identifies the objects J10 to J16, corresponding to the extracted R10 to R16, among the objects J1 to J6 and J8 to J16 displayed on the display 35, as the target objects (S30). The CPU 7 of the terminal device 3A, as shown on a screen G6, highlights the target objects J10 to J16 for a predetermined period of time (S31, S32), and as shown on a screen G7 in FIG. 7, subsequently stops highlighting the target objects J10 to J16 after the predetermined period of time passes (S33).

After the notification is sent from the terminal device 3B to the user A and the user C, in a case where the objects J6 and J10 are deleted and objects J20 and J21 are added on the terminal device 3A, and the objects J2 and J4 are deleted and an object J24 is added, as shown on a screen G8, the CPU 7 of the terminal device 3A executes processing to edit each object (yes at S8, S9), and stores respective history information R18 to R24 corresponding to each object in the history information storage area 39 (S10). The object J20 is a square-shaped quadrilateral enclosing the object J5, and the objects J21 and J24 are the text "OK."

In a case where the notification is sent from the terminal device 3A to the user B and user C (yes at S6), the CPU 7 of the terminal device 3C executes the notification display processing (S7). As shown in FIG. 5, the CPU 7 of the terminal device 3C acquires the notification (yes at S6). After the display of the screen associated with the notification (yes at S20, S21, S22), the user A who sent the notification is identified based on the history ID "R25" (yes at S23, S24, S25). As the notification sent by the user A prior to the history information R25, the history information R7 is stored (S26, yes at S27). In this case, the CPU 7 of the terminal device 3C designates, as the target period, the period between the first checkpoint acquired at step S23 and the second checkpoint identified at step S27 based on the first checkpoint.

The CPU 7 of the terminal device 3C sets the history information R25 retrieved at step S24 as the first checkpoint, and the history information R7 acquired at step S27 as the second checkpoint. In a case where a plurality of checkpoints storing the same user information as the first checkpoint are stored prior to the first checkpoint, the CPU 7 designates the checkpoint closest to the first checkpoint as the second checkpoint. The CPU 7 of the terminal device 3C designates the period between a first checkpoint and a second checkpoint, which is identified based on the first checkpoint, among a plurality of checkpoints, as a target period T2, and extracts the R8, R9, and R18 to R24 as the history IDs of the history information including the user information at the first checkpoint within the target period T2 (S28).

The CPU 7 of the terminal device 3C identifies, as the target objects, the objects J8, J9, J20, J21, and J24 corresponding to the extracted R8, R9, and R18 to R24, from among the objects J1, J3, J5, J8, J9, J11 to J16, J20, and J21, and J24 displayed on the display 35 (S30). The CPU 7 of the terminal device 3C, as shown on a screen E1, highlights for a predetermined period of time the target objects J8, J9, J20, J21, and J24 (S31, S32), and stops highlighting the target objects J8, J9, J20, J21, and J24 after the predetermined period of time is passed, as shown on screen E2 (S33).

After the notification is sent from the terminal device 3A to the user B and the user C, in a case where the user A is selected in the selection field 76 of the terminal device 3A where a screen G9 is displayed (yes at S13), the CPU 7 of the terminal device 3A updates the display area 74, as shown on a screen G10, to indicate the checkpoint history 97 and 99 that were sent by the user A, among the checkpoint histories 97 to 99 displayed in the display area 74 (S14). In the display area 74, the checkpoint histories 97 and 99, generated by the user A sending a notification, are displayed, and the checkpoint history 98, generated by the user B sending a notification, is not displayed. The CPU 7 returns the processing to step S2.

In a case where the checkpoint history 97 is selected from within the display area 74 of the terminal device 3A (yes at S6, no at S20), the CPU 7 of the terminal device 3A determines the user A as the sender of the notification based on the history ID "R7" (yes at S23, S24, S25). The CPU 7 of the terminal device 3A determines that no notification sent by the user A prior to the history information R7 is included (S26, no at S27). The CPU 7 of the terminal device 3A acquires the R1 to R6 as the history IDs 41 of the history information that were stored prior to the history information R7 among the plurality of pieces of history information stored in the history information storage area 39 and for which the user information 42 corresponds to the user A. The CPU 7 of the terminal device 3A identifies, as the target object, from among the objects J1, J3, J5, J8, J9, J11 to J16, J20, J21, and J24 being displayed on the display 35, the objects J1, J3, and J5 corresponding to the extracted history IDs R1 to R6 (S30). Because the target object is identified from among the objects displayed on the display 35, any object that is deleted during the editing processing and is therefore not displayed on the display 35 shall not be included as a target object, even in a case where the object was edited during the target period. As shown on a screen G11, the CPU 7 of the terminal device 3A highlights the target objects J1, J3, and J5 for a predetermined period of time (S31, S32), and, after the predetermined period of time is passed, stops highlighting the target objects J1, J3, and J5 (S33). In a case where the terminal device 3 receives an instruction to terminate the main processing, the terminal device 3 sends a notification to terminate the processing to the server 2 and terminates the main processing.

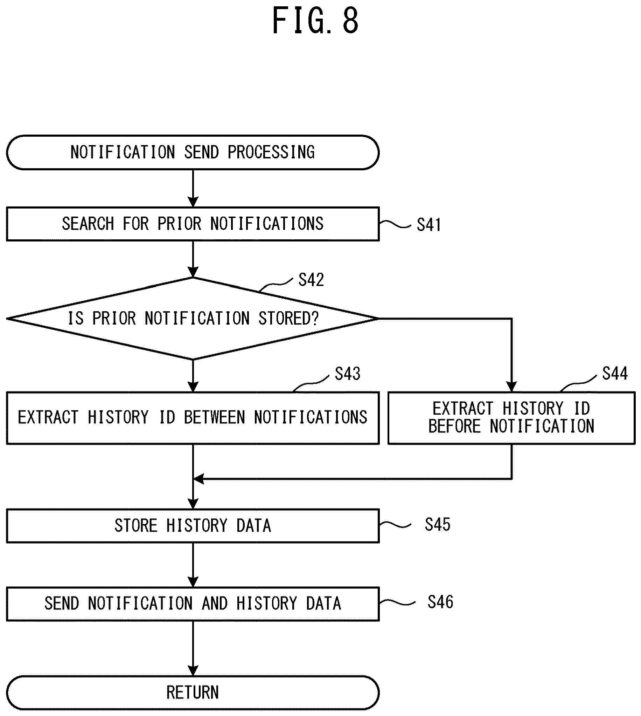

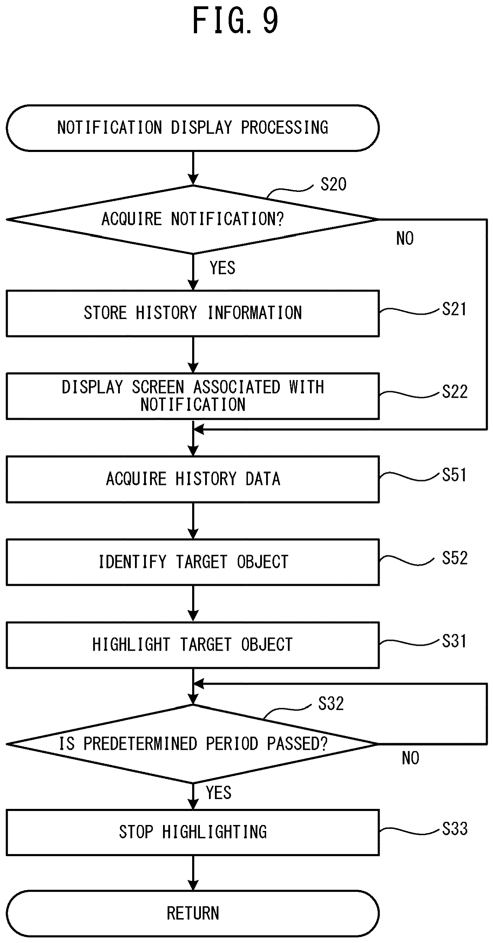

The notification send processing and the notification display processing executed in main processing according to a first modified example will be described with reference to FIG. 8 and FIG. 9. In the main processing of the above-described embodiment, in a case where the notification is acquired and the checkpoint history is selected, the history ID of the target period, which is used to identify the target object, is extracted. However, in the main processing of the first modified example, the history ID generated at step S3 is acquired as the target period, and in a case where the notification is sent, the history ID of the target period is extracted and stored in the flash memory 34.

The notification send processing of the first modified example, shown in FIG. 8, is the processing executed at step S4 of the main processing in FIG. 2. As shown in FIG. 8, in the notification send processing, the CPU 7 searches for notifications stored prior to the history ID generated at step S3, similar to step S26 (S41). In a case where a notification that was stored prior to the history ID generated at step S3 is included (yes at S42), among a plurality of checkpoints, the period between the first checkpoint and the second checkpoint identified according to the first checkpoint is designated as the target period, and the history information within the target period is extracted, similar to step S28 (S43). In a case where no notification stored prior to the history ID generated at step S3 is included (no at S42), the CPU 7 extracts the history ID that was stored before the history ID generated at step S3 and that matches the user information (S44).

The CPU 7 associates the history IDs extracted at step S43 and step S44, as history data, with the history ID generated at step S3, and stores this information in the flash memory 34 (S45). The CPU 7 sends the history ID generated at step S3 and the history data stored at step S45 together with the notification (S46). With this, the CPU 7 terminates the notification send processing of the modified example as described above, and returns the processing to the main processing.

The notification display processing of the first modified example, shown in FIG. 9, is processing executed at step S7 of the main processing in FIG. 9. In FIG. 9, the same step numbers are assigned to processing steps identical to those in the notification display processing in FIG. 5. As shown in FIG. 9, the notification display processing of the modified example differs from the processing at step S23 to step S30 in that the processing at step S51 and step S52 is executed instead. Descriptions of processing similar to the above-described embodiment are omitted. The following description focuses on the processing at step S51, which differs from the above-described embodiment.

At step S51, the CPU 7 acquires history data in which the history ID is associated with a notification or an instruction to select a notification from another terminal device 3, acquired through the processing at step S6 (S51) . The CPU 7 identifies, among the objects displayed on the display 35, those objects whose history data includes a history ID as the target objects (S52).

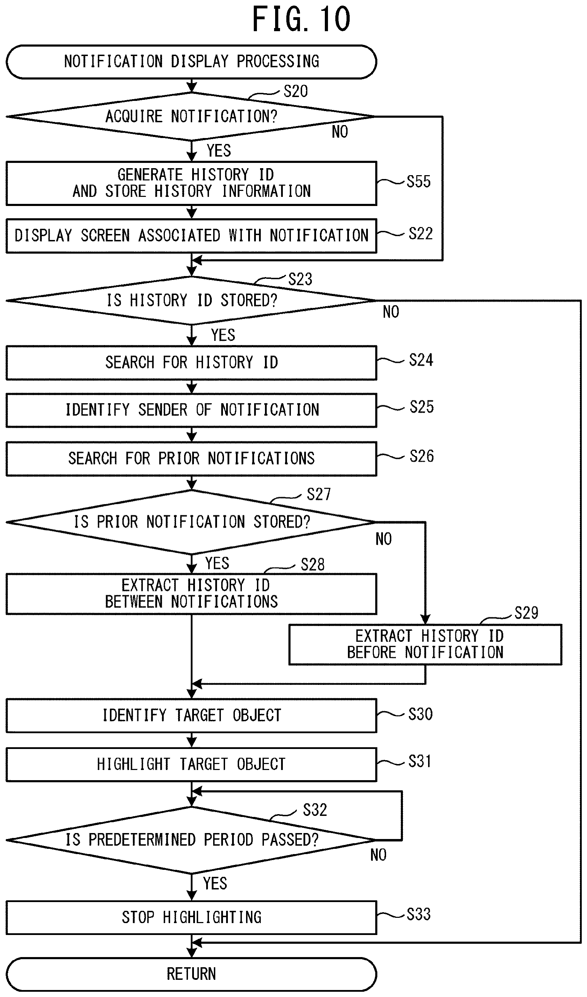

The notification display processing executed at step S4 of main processing of a second modified example will be described with reference to FIG. 10. In FIG. 10, processing similar to the notification display processing described in FIG. 5 are assigned the same step numbers. As shown in FIG. 10, in the notification display processing of the second modified example, the processing at step S55 is executed instead of the processing at step S21, which differs from the notification display processing of the above-described embodiment in this respect. In the main processing of the embodiment described above, the terminal device 3, which sends a notification, assigns a history ID to the notification (S3) and sends the notification together with the assigned history ID (S4). However, in the second modified example, the CPU 7 sends a notification that does not include the history ID (S4), and stores the history information corresponding to the notification in the history information storage area 39 (S5). The terminal device 3 that receives a notification from another terminal device 3 assigns a history ID to the received notification, and stores, in the history information storage area 39, the history information corresponding to the received notification, which includes the assigned history ID (S55). In the case of the second modified example as well, the terminal device 3 can execute the same processing as in the above-described embodiment.

In the above-described embodiment, the terminal device 3, the display 35, the input unit 36, and the communication unit 37 are respective examples of the computer, the display, the input unit, and the communication unit of the present invention. The processing at step S10 is an example of the history storing step of the present invention. The processing at step S9 is an example of the display controlling step of the present invention. The processing at step S6 is an example of the acquiring step of the present invention. The processing at step S30 is an example of the identifying step of the present invention. The processing at step S31 to step S33 is an example of the highlighting step of the present invention. The processing at step S5 is an example of the point storage step of the present invention. The processing at step S4 is an example of the notifying step of the present invention. The processing at step S12 is an example of the list displaying step of the present invention. The processing at step S14 is an example of the extracting and displaying step of the present invention.

Based on the display program of the above-mentioned embodiment, the CPU 7 of the terminal device 3, which includes the display 35 and the CPU 7, executes the following processing. Based on execution of editing of the object (yes at S8), the CPU 7 stores the history information that associates the object, the editing content of the object, and order information indicating the editing order (S10). Based on the execution of the editing (yes at S8), the CPU 7 updates the object to be displayed on the display 35 (S9). The CPU 7 acquires the target period (S6). The target period is a part of the entire period in which the plurality of the history information is stored. The CPU 7 identifies, as the target object, an object corresponding to the history information within the target period among the plurality of the history information, among one or more objects displayed on the display 35 (S30). The CPU 7 highlights the identified target object (S31). The terminal device 3, which executes the display program, contributes to facilitating the user's distinction between the target object edited during the target period and objects other than the target object, among one or more objects displayed on the display 35, by highlighting the target object on the display 35. Accordingly, the highlighting step (S31) of the display program contributes to further improving, compared to prior art, the convenience for the user in confirming the process by which an object displayed on the display 35 is edited to become the current object.

Based on the display program of the embodiment, the CPU 7 of the terminal device 3 stores the checkpoint that includes order information and is used to identify the target period (S5). The CPU 7 acquires information that designates the checkpoint (S6). The CPU 7 identifies, as the target object, an object among one or more objects displayed on the display 35 that corresponds to the history information within the target period delimited by checkpoints (S30). The terminal device 3, which executes the display program, contributes to facilitating the user's distinction between the target object edited during the target period delimited by the checkpoint and highlighted on the display 35 among one or more objects displayed on the display 35, and objects other than the target object.

Based on the display program of the embodiment, the CPU 7 of the terminal device 3 stores the checkpoint that includes order information and is used to identify the target period (S5). The CPU 7 acquires information that designates the checkpoint (S6). The CPU 7 identifies, as the target object, the object corresponding to the history information of the target period from among one or more objects displayed on the display 35, with the target period being the period between the first checkpoint and the second checkpoint identified based on the first checkpoint, among the plurality of checkpoints (S30). The terminal device 3, which executes the display program, contributes to facilitating the user's distinction, from among the one or more objects displayed on the display 35, the target object edited during the period between the first checkpoint and the second checkpoint from objects other than the target object, by highlighting the target object on the display 35.

The CPU 7, at step S10, stores, as the history information, not only the object, the editing content, and the order information, but also associates the user information that identifies the user (at step S10). The CPU 7 stores checkpoints including, in addition to order information, the user information (S5). The CPU 7 identifies, from among one or more objects displayed on the display 35, as the target object, an object corresponding to the history information within the target period delimited by the checkpoint and including user information of the checkpoint (S30). The terminal device 3, which executes the display program, by highlighting the target object on the display 35, contributes to facilitating the user's distinction, among one or more objects displayed on the display 35, between the target object edited by the checkpoint user within the target period delineated by the checkpoint, and objects other than the target object. The display program contributes to improving user convenience in confirming the editing content of the specific user, in cases where editing of objects is performed by the plurality of users.

The CPU 7 sends the notification to another user via the communication unit 37 included in the terminal device 3 (S4). The CPU 7 stores the checkpoint based on the notification being sent (S5). The terminal device 3 that executes the display program contributes to automatically storing the checkpoint in the case where the notification is sent to another user. The display program contributes to eliminating the burden on the user to add checkpoints in the process of editing the object. The display program contributes to identifying, as the target object, an object within the period corresponding to the notification sent to another user within the editing system 1.

In the modified example, the CPU 7 stores, based on the acquisition of the notification from the other user, the checkpoint including the user information of the other user (S55). The display program contributes to automatically storing the checkpoint on the terminal device receiving the notification, even in the case where the notification does not include the checkpoint during the process of editing the object, thereby eliminating the burden on the user to add checkpoints. The display program contributes to the user identifying, as the target object, an object within the period corresponding to the notification sent by the other user.

The CPU 7 sends, via the communication unit 37, both the notification to the other user and the checkpoint to be stored based on the notification (S4). The display program can include the history ID in the notification, which contributes to ensuring that the history ID received by the recipient terminal device 3 matches the history ID stored in the history information storage area 39 of the sender terminal device 3. The display program contributes to omitting the processing of adding the checkpoint on the receiving terminal device 3.

The CPU 7 causes the display 35 to display the list of one or more checkpoints (S12). The CPU 7 extracts from one or more checkpoints the checkpoint including the designated user information and displays the checkpoint that is extracted on the display 35 (yes at S13, S14). The CPU 7 acquires the checkpoint designated via the input unit 36 of the terminal device 3, among the checkpoints displayed on the display 35 (S6). The terminal device 3 executing the display program contributes to acquiring the checkpoint designated by the user via the input unit 36. The user can easily select the checkpoint from among the checkpoints listed in the list display or extracted in an extraction display to designate the period to be highlighted.

The CPU 7 extracts the history information within the target period set as the period between the first checkpoint and the second checkpoint identified based on the first checkpoint (S28). The CPU 7 identifies, from among one or more objects displayed on the display 35, the object corresponding to the extracted history information as the target object (S30). The terminal device 3 that executes the display program contributes to identifying the target object by extracting the history information within the target period. The display program of the above-described embodiment contributes to reducing the processing load when sending notifications, and also to avoiding overloading the storage area of the flash memory 34 by storing the history data, compared to the case where the history data acquired by extracting the history information within the target period is stored, as it is with the display program of the first modified example.

The CPU 7 according to the first modified example designates, as the target period, the period between the first checkpoint and the second checkpoint identified based on the first checkpoint, among the plurality of checkpoints, and acquires the history data acquired by extracting the history information within the target period (S51). The CPU 7 according to the first modified example identifies, as the target object, the object corresponding to the history data, among one or more objects displayed on the display 35 (S52). The display program contributes to simplifying the processing for identifying the target object compared to the case where history data is not acquired.

The CPU 7 highlights, for the predetermined time, the target object on the display 35, among the one or more objects displayed on the display 35 (S31 to S33). The terminal device 3 that executes the display program contributes to saving the user the trouble of returning the highlighting to normal. The terminal device 3 contributes to improving the convenience to the user in highlighting the target object.

The display program and the display method of the present invention are not limited to the embodiment described above, and various modifications may be made without departing from the scope of the invention. For example, the following variations may be suitably applied. The invention can be executed in various forms, such as a non-transitory computer-readable medium storing a display program, a display device, or a display system.

In the above embodiment, the terminal device 3 is not limited to a tablet and may be a smartphone, personal computer, or dedicated terminal, for example. The display 35 of the terminal device 3 should be capable of displaying images, and could be, for example, an organic EL display, a plasma display, a plasma tube array display, or an electronic paper display using electrophoresis. The input unit 36 of the terminal device 3 may include not only a touch screen, but also devices such as a keyboard, mouse, and joystick. The terminal device 3 may be shared among a plurality of users. The main processing may be executed in the editing system 1 that includes a single terminal device 3 and server 2, or the main processing may be executed in the terminal device 3 that does not communicate with the server 2. The communication unit 37 may optionally be omitted.

The attributes of an object may include types other than strokes, markers, characters, shapes, and images, or the attributes may include simply some types, such as simply characters.

The timing of storing the history information may be changed as appropriate, and may be stored in the history information storage area 39 for a plurality of editing operations. The history information may simply be information associated with the object, the editing content of the object, and the order information indicating the editing order, and need not include the user information or may include other information. The order information may be information that can identify the storage order of history information such as the history ID, in addition to the editing time and date.

The method of generating and storing a checkpoint may be modified as appropriate. For example, the CPU 7 may display a checkpoint generation button on the display 35 and generate a checkpoint in a case where the generation button is pressed down. The CPU 7 may automatically generate a checkpoint in a case where a predetermined button displayed on the display 35, such as an overwrite save button, is selected. The CPU 7 may automatically generate a checkpoint based on a predetermined timing (for example, every 10 minutes, at a specific time, and the like). The terminal device 3 may acquire the checkpoint generated by the server 2. The checkpoint may be generated by the CPU 6 of the server 2 and sent to each terminal device 3. The checkpoint may be stored separately from the history information.

The display program that includes instructions to execute the main processing may be stored in the storage device of the terminal device 3 before the CPU 7 of the terminal device 3 executes the display program. Therefore, the method of acquiring the display program, the acquisition path, and each of the devices that store the program may be changed as appropriate. The display program executed by terminal device 3 may be received from other devices via cable or wireless communication, and stored in storage devices such as the storage unit. Other devices include, for example, PCs and servers connected via a network.

Each step of the main processing is not limited to being executed by the CPU 7 and may be executed in part or in whole by other electronic devices (such as ASICs). Similarly, the steps of the server processing are not limited to execution by the CPU 7, and some or all of them may be executed by other electronic devices. The steps of the main processing may be distributed among a plurality of electronic devices, such as several CPUs. The steps of the main processing may be reordered, omitted, or added as appropriate. The following changes may be made as appropriate to the main processing.

The CPU 7 may omit step S32 and step S33 and stop highlighting the target object that started being highlighted at step S31 in a case where an instruction to stop the highlighting is detected. The CPU 7 may omit step S11 and step S12 and need not display a list of checkpoints. The CPU 7 may omit step S13 and step S14 and need not select and display a checkpoint. The checkpoint selection may be changed as appropriate based on the checkpoint generation method.

The method for designating a target period may be modified as appropriate. The CPU 7 may omit the processing from step S25 to step S28 and, regardless of whether a checkpoint prior to the history ID acquired at step S23 is stored, may consider the period prior to the checkpoint corresponding to the history ID acquired at step S23 as the target period. The CPU 7 may designate, as the target period, the period between two history information items selected from the list of the history information displayed in the display area 74. In this case, the history information may be information generated based on an editing operation, or information generated based on a specific operation such as the selection of a button. The CPU 7 may also designate, as the target period, the period preceding or following a single piece of the history information selected from the list of the history information displayed in the display area 74. In such cases, the target period may be a period including the selected history information, or a period not including the selected history information. The CPU 7 may identify the target period by excluding a period designated from a total period in which a plurality of the history information are stored. The CPU 7 may acquire a specific time, and may set, as the target period, a period delimited by the acquired time.

The method for identifying the target object may be modified as appropriate. The CPU 7 may omit the processing at step S25 and search for notifications sent by arbitrary users in S26, and may perform similar processing. In this case, the target object identified at step S30 refers to all objects among the objects displayed on the display 35 that correspond to the history information within the target period. In the processing at step S25, the CPU 7 may identify a plurality of users and, at step S26, may search for notifications sent by the identified plurality of users. In this case, the target object identified at step S30 refers to an object among the objects displayed on the display 35 that corresponds to the history information associated with the editing operations performed by the plurality of identified users within the target period. The CPU 7 may omit step S2 to step S5, and may also be unable to send notifications to other terminal devices 3. Each of the above-described embodiments and modified examples may be combined with each other to the extent that no inconsistency arises. In addition to the combinations exemplified in the claims, the present applicant also intends to acquire patent rights for embodiments in which features are combined with each other within a scope that does not depart from the gist of the present invention and as long as no contradiction arises.

### DESCRIPTION OF SYMBOLS

1: Editing System, 3, 3A, 3B, 3C: Terminal Device, 7: CPU, 32: ROM, 33: RAM, 34: Flash Memory, 35: Display, 36: Input Unit, 37: Communication Unit

## Claims

1. A display program for a computer including a display and a processor, the display program including instructions that instruct the processor to execute:
a history storing step for storing, based on execution of editing of an object, history information associating the object, editing content of the object, and order information indicating an editing order;
a display controlling step for updating the object to be displayed on a display based on the execution of the editing of the object;
an acquiring step for acquiring a target period which is part of an entire period during which a plurality of pieces of the history information are stored;
an identifying step for identifying, as a target object, among one or more of the objects being displayed on the display, the object corresponding to the history information within the target period, among the plurality of pieces of the history information; and
a highlighting step for highlighting the identified target object.

2. The display program according to claim 1, wherein
the instructions further instruct the processor to execute:
a point storage step for storing a checkpoint including the order information used for is used to identify the target period, and
the acquiring step includes acquiring information designating the checkpoint, and
the identifying step includes identifying, as the target object, the object corresponding to the history information within the target period delimited by the checkpoint, among the one or more objects displayed on the display.

3. The display program according to claim 1, wherein
the instructions further instruct the processor to execute:
a point storage step for storing a checkpoint, including the order information, which is used to identify the target period, wherein
the acquiring step includes acquiring information designating the checkpoint, and
the identifying step includes designating, as the target period, a period between a first checkpoint and a second checkpoint, from among a plurality of the checkpoints, and identifying, as the target object, the object corresponding to the history information of the target period, among the one or more objects displayed on the display.

4. The display program according to claim 2 or claim 3, wherein
the point storage step includes storing, as the history information, user information identifying a user, in addition to the object, the editing content, and the order information, in association with each other,
the point storage step includes storing the checkpoint including the user information, in addition to the order information, and
the identifying step includes identifying, as the target object, the object corresponding to the history information that includes the user information of the checkpoint, and within the target period delimited by the checkpoint, among the one or more objects displayed on the display.

5. The display program according to claim 4, wherein
the instructions further instruct the processor to execute:
a notifying step for sending a notification to another user via a communication unit of the computer, and
the point storage step includes storing the checkpoint based on the notification being sent.

6. The display program according to claim 4, wherein
the point storage step includes storing, based on acquisition of a notification from the other user, the checkpoint including the user information of the other user.

7. The display program according to claim 5, wherein
the notifying step includes sending, to the other user via the communication unit, the notification and a checkpoint to be stored based on the sending of the notification.

8. The display program according to claim 4, wherein
the instructions further instruct the processor to execute:
a list display step for displaying, on the display, a list of one or more of the checkpoints; and
an extracting and displaying step for extracting the checkpoint including the user information that is designated from the one or more checkpoints, and displaying the extracted checkpoint on the display, and
the acquiring step includes acquiring the checkpoint designated by an input unit of the computer, among the checkpoints displayed on the display.

9. The display program according to claim 3, wherein
the identifying step includes extracting the history information within the target period, and identifying, as the target object, the object corresponding to the extracted history information, among the one or more objects displayed on the display.

10. The display program according to claim 3, wherein
the acquiring step includes acquiring history data extracted from the history information within the target period, which is associated with the target period, and
the identifying step includes identifying, as the target object, the object corresponding to the history data, among the one or more objects displayed on the display.

11. The display program according to any one of claims 1 to 3, wherein
the highlighting step includes highlighting, for a predetermined period of time on the display, the target object, among the one or more objects being displayed on the display.

12. A display method executed by a processor of a computer including a display and the processor, the display method comprising:
a history storing step for storing, based on execution of editing of an object, history information associating the object, editing content of the object, and order information indicating an editing order;
a display controlling step for updating the object to be displayed on the display based on the execution of the editing of the object;
an acquiring step for acquiring a target period which is part of an entire period during which a plurality of pieces of the history information are stored;
an identifying step for identifying, as a target object, among one or more of the objects being displayed on the display, the object corresponding to the history information within the target period, among the plurality of pieces of the history information; and
a highlighting step for highlighting the identified target object.
